Europäisches Patentamt

European Patent Office

Office européen des brevets

(19)

(11) Numéro de publication : **0 401 079 B1**

## (12) FASCICULE DE BREVET EUROPEEN

(45) Date de publication du fascicule du brevet :
04.01.95 Bulletin 95/01

(51) Int. Cl.⁶ : **G05D 1/00, B64C 13/04**

(21) Numéro de dépôt : **90401312.5**

(22) Date de dépôt : **17.05.90**

(54) **Dispositif de commande électromécanique utilisable pour le pilotage d'un véhicule.**

(30) Priorité : **31.05.89 FR 8907492**

(43) Date de publication de la demande :
**05.12.90 Bulletin 90/49**

(45) Mention de la délivrance du brevet :
**04.01.95 Bulletin 95/01**

(84) Etats contractants désignés :
**CH DE ES GB IT LI NL SE**

(56) Documents cités :
**EP-A- 0 003 947**
**EP-A- 0 123 664**
**EP-A- 0 179 209**
**EP-A- 0 261 056**
**FR-A- 2 340 589**
**GB-A- 2 065 042**
**GB-A- 2 073 114**
**US-A- 4 500 967**

(73) Titulaire : **SEXTANT AVIONIQUE S.A.**
**Immeuble le Galilée**
**Parc Tertiaire de Meudon**
**5/7 rue Jeanne Braconnier**
**F-92366 Meudon la Forêt Cédex (FR)**

(72) Inventeur : **Marcillat, Gérard**
**5, rue Aglophile Fradin**
**F-86100 Chatellerault (FR)**
Inventeur : **Mota, Jean-Pierre**
**La Fouinière,**
**Saint Sauveur**
**F-86100 Chatellerault (FR)**

(74) Mandataire : **de Saint-Palais, Arnaud Marie et al**
**CABINET MOUTARD**
**35, Avenue Victor Hugo**
**F-78960 Voisins le Bretonneux (FR)**

## Description

La présente invention concerne un dispositif de commande électromécanique utilisable pour le pilotage d'un véhicule, tel que, par exemple, un aéronef.

D'une manière générale, on sait que l'utilisation des commandes électriques de vol sur les aéronefs amène à reporter au niveau des manches de pilotage deux fonctions essentielles, à savoir :

- la création d'un effort résistant (fonction de sensation artificielle),
- la fixation du point neutre de cet effort résistant en un emplacement déterminé de la course du manche de pilotage (fonction de "trim").

Dans les dispositifs de commande mécanique, ces fonctions sont réalisées le plus souvent par un dispositif placé en parallèle sur la timonerie (actionneur de "trim" et de sensation d'effort).

Bien entendu, ces mêmes fonctions sont à prévoir, en général avec des caractéristiques différentes, sur les deux axes (longitudinal et latéral) de chaque manche, dont les positions mesurées par des capteurs constituent les ordres de pilotage, que ce soit par commande de position ou de vitesse (ou commande intégrale).

Par ailleurs, pour tenir compte des conditions extérieures (par exemple la vitesse), ces dispositifs de commande doivent comprendre des moyens permettant de faire varier en vol certaines caractéristiques de la loi d'effort appliquée au manche en vue d'obtenir la sensation d'effort résistant la plus appropriée.

Les dispositifs de commande électriques utilisés sur les aéronefs font plus particulièrement intervenir, par exemple de la façon indiquée dans le brevet EP-A-0 123 664 :

- un manche de pilotage articulé sur un support au moyen d'un dispositif d'articulation à au moins un degré de liberté et qui présente donc au moins un axe de sortie,
- un ensemble de détection comportant au moins un capteur de position associé audit axe,
- au moins un électromécanisme agissant sur ledit axe par l'intermédiaire d'un dispositif de transmission, de manière à opposer aux mouvements du manche des efforts résistants conformément à une loi d'effort prédéterminée.

De même que les dispositifs de commande mécanique précédemment évoqués, ces dispositifs de commande électrique doivent être conçus de manière à garantir un maximum de sécurité, notamment en limitant les pannes non catastrophiques (fonctionnement dégradé) et en interdisant les pannes catastrophiques.

Ainsi, dans les dispositifs de commande électrique du type de celui précédemment décrit, les moyens de sécurité contre les risques de blocage ou de fonctionnement erroné des électromécanismes servant à engendrer la loi d'effort désirée, comprennent généralement un embrayage monté dans le dispositif de transmission reliant le manche à chacun de ces électromécanismes ; cet embrayage permet notamment de libérer le manche à la suite de la réception d'un signal de commande émis à la suite de la détection d'une anomalie présente au niveau de l'électromécanisme et des circuits électroniques qui lui sont associés.

Il s'avère toutefois que ces dispositifs de sécurité demeurent imparfaits et ne permettent pas de pallier à toutes les anomalies de fonctionnement dont peut faire l'objet le dispositif de commande. Tel est notamment le cas lorsque survient :

- un blocage du dispositif de transmission associé à un électromécanisme (y compris un blocage mécanique au niveau de l'embrayage),
- un fonctionnement erroné des circuits électroniques de commande et d'asservissement des électromécanismes,
- un défaut du circuit de commande de l'embrayage.

L'invention a donc pour but d'améliorer la sécurité de ces dispositifs et de supprimer les risques engendrés par de telles anomalies.

A cet effet, elle propose un dispositif de commande électrique du type susdit, caractérisé en ce que ledit manche de pilotage est articulé sur un support au moyen d'un dispositif d'articulation à deux degrés de liberté et à deux axes de sortie, respectivement associés à deux capteurs de position dudit ensemble de détection, deux électromécanismes agissant respectivement sur lesdits axes par l'intermédiaire de deux dispositifs de transmission respectifs, de manière à opposer aux mouvements du manche des efforts résistants conformément à une loi d'effort prédéterminée, en ce que chacun des dispositifs de transmission comprend une liaison élastique disposée en série, en ce que la commande de chacun des électromécanismes est assurée par un dispositif d'asservissement engendrant un signal de commande représentatif de la différence entre la valeur de l'effort exercé sur le manche par l'électromécanisme et une première valeur de consigne élaborée par un calculateur selon une loi d'effort, en fonction de la position du manche, et en ce que la valeur de l'effort exercé sur le manche par l'électromécanisme est déterminée en fonction des valeurs mesurées par les détecteurs qui mesurent les déformations de la liaison élastique.

Un mode de réalisation de l'invention sera décrit ci-après à titre d'exemple non limitatif, avec référence aux dessins annexés dans lesquels :

La figure 1 est une représentation schématique illustrant la structure générale d'un dispositif pour la commande électrique de vol d'un aéronef (minimanche) ;

La figure 2 est un schéma synoptique de la liaison cinématique reliant le manche à l'un des électromécanismes servant à engendrer un effort résistant, variable selon une loi d'effort, cette figure représentant en outre schématiquement les circuits électroniques associés à cette liaison ; et

La figure 3 est un diagramme représentant la variation du couple résistant appliquée sur le manche par l'une des liaisons cinématiques, selon une loi d'effort déterminée en fonction de la position angulaire du manche, ainsi que la variation des principaux efforts mis en jeu pour engendrer ce couple.

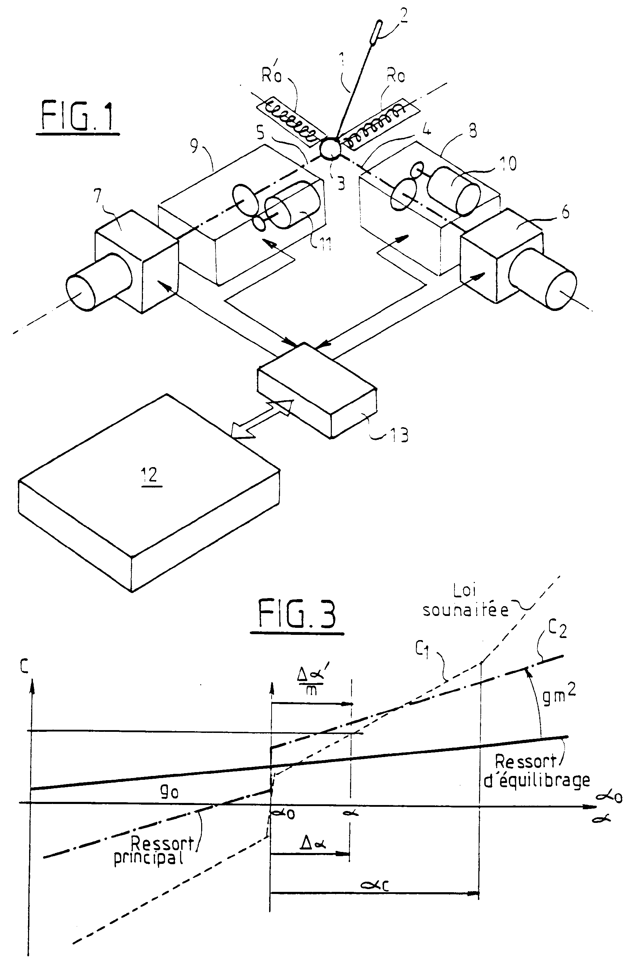

Tel que représenté sur la figure 1, le dispositif de commande électrique fait intervenir un manche 1, dont une extrémité porte une poignée 2 pouvant être équipée de boutons de commande usuels ("sapin de trim", débrayage et priorité) et dont l'autre extrémité est articulée sur un support au moyen d'un dispositif d'articulation 3 à deux degrés de liberté qui présente donc deux axes de sortie 4, 5, l'un de ces axes correspondant au roulis, tandis que l'autre correspond au tangage.

Ce manche 1 est accouplé à deux électromécanismes 6, 7 pouvant, par exemple, comprendre chacun un motoréducteur conçu de manière à opposer un effort résistant déterminé (élastique ou visqueux) aux mouvements du manche 1.

Ces deux électromécanismes 6, 7 sont respectivement reliés aux deux axes 4, 5 du manche 1 par l'intermédiaire de deux dispositifs de transmission 8, 9 respectifs, représentés ici schématiquement par deux blocs.

La position angulaire du manche 1 est détectée par deux capteurs 10, 11 respectivement accouplés aux deux axes de sortie (ou à un élément des dispositifs de transmission 8, 9 associé à ces axes).

Ce dispositif est géré par un calculateur 12, par l'intermédiaire d'un circuit électronique 13 de commande et de détection qui assure la commande des électromécanismes 6, 7 ainsi que des éléments de commande des dispositifs de transmission 8, 9, et qui reçoit des informations relatives aux paramètres utiles détectés au niveau du manche 1 et des dispositifs de transmission 8, 9.

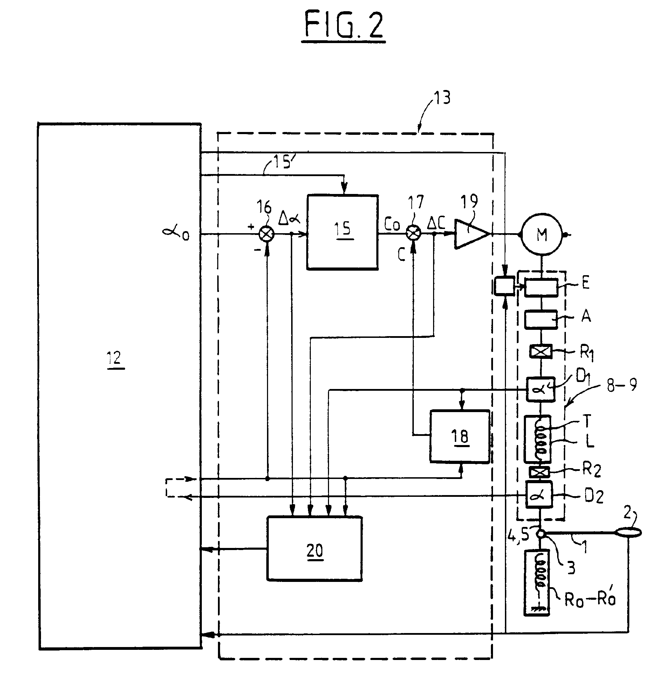

Dans le mode d'exécution représenté sur la figure 2, l'électromécanisme associé à chacun des axes de sortie de l'articulation du manche consiste en un moteur à courant continu M, qui peut être avantageusement de type autoasynchrone (sans balais). Il est accouplé à l'axe 4 ou 5, par l'intermédiaire d'un dispositif de transmission rotatif comprenant successivement, à partir du moteur :

- un embrayage E à commande électrique de type à appel de courant (débrayé en l'absence de courant d'alimentation) ;
- un amortisseur A à courant de Foucault ;
- un premier réducteur $R_1$ démultiplicateur présentant un rapport de démultiplication $r_1$ ;
- une liaison élastique L pouvant par exemple consister en un ressort de torsion T (présentant une précontrainte P et une raideur g) dont une extrémité est reliée à l'arbre de sortie du réducteur $R_1$ ;

- un second réducteur $R_2$ présentant un rapport de réduction $r_2$ dont l'arbre d'entrée est relié à la deuxième extrémité de la liaison élastique L et dont l'arbre de sortie est accouplé à l'axe de sortie 4, 5 du manche 1.

Dans cet exemple, les positions angulaires des arbres de sortie des réducteurs $R_1$, $R_2$ sont respectivement mesurées par deux détecteurs $D_1$, $D_2$. Par ailleurs, le manche 1 est rappelé en position centrale, grâce à deux ressorts $R_0$, $R'_0$ de précontrainte $P_0$, $P'_0$ et de raideur $g_0$, $g'_0$ appliquant respectivement un couple relativement faible sur les deux axes de sortie 4, 5 de l'articulation 3 (ce dispositif est nécessaire pour assurer la commande des gouvernes en vitesse ou en commande intégrale, en mode dégradé, si ce type de pilotage est prévu).

Il ressort de la structure précédemment décrite que le dispositif de commande permet d'opposer aux mouvements du manche 1 des efforts de nature élastique engendrés par une combinaison de moyens électromécaniques (moteur M) et de moyens purement mécaniques (moyens élastiques L).

La précontrainte p du ressort T engendre un seuil qui est ramené sur l'axe de sortie 4, 5 de l'articulation 3 (seuil désiré) auquel se rajoutent les frottements engendrés dans l'articulation 3.

Les caractéristiques du ressort T et du réducteur $R_2$ étant connues, les valeurs mesurées par les détecteurs $D_1$, $D_2$ (dont l'écart est représentatif des déformations angulaires du ressort T) permettent de calculer le couple transmis à l'axe 4, 5 par le dispositif de transmission 8, 9.

L'embrayage E permet notamment de libérer le manche 1 du couple résistant exercé par le moteur M, en cas d'anomalie de fonctionnement de ce dernier. Dans ce cas, l'amortisseur A permet de garantir encore une certaine qualité du pilotage.

A cette fonction de sécurité s'ajoute celle conférée par le ressort T dans le cas d'un blocage du moteur M et où de la partie du dispositif de transmission située en amont de ce ressort T. Dans ce cas, l'actionnement du manche 1 demeure possible et s'effectue avec un effort résistant essentiellement dû à l'action du ressort.

Comme précédemment mentionné, le moteur M (qui constitue ici le susdit électromécanisme) est alimenté de manière à engendrer un couple résistant variant en fonction de la position angulaire $\alpha$ du manche 1 selon une loi d'effort prédéterminée.

Dans cet exemple, la loi d'effort est déterminée par un circuit électronique 15 qui élabore un signal $C_0$ représentatif du couple qui doit être exercé sur l'axe de sortie 4, 5 de l'articulation 3 du manche 1, en fonction de la position angulaire $\alpha$ du manche 1 mesurée

par le détecteur $D_2$ et d'ordres divers provenant notamment du système de pilotage (liaison 15' avec le calculateur 12). En fait, le signal $\alpha$ émis par le détecteur $D_2$ est appliqué à l'une des entrées d'un soustracteur 16 dont l'autre entrée reçoit un signal de référence $\alpha_0$ élaboré par le calculateur 12. Ce soustracteur 16 délivre donc un signal $\Delta\alpha = \alpha_0 - \alpha$ qui est appliqué au circuit 15.

Le signal $C_0$ délivré par le circuit 15 est transmis, en tant que valeur de consigne, à l'une des entrées d'un soustracteur 17 qui reçoit, sur son autre entrée, un signal $C$ représentatif du couple transmis à l'axe de sortie 4, 5 de l'articulation 3 du manche 1 par le dispositif de transmission 8, 9.

Ce signal $C$ est lui-même élaboré par un circuit de calcul 18 en fonction des valeurs angulaires $\alpha$, $\alpha'$ détectées par les détecteurs $D_1$, $D_2$, et des caractéristiques du ressort $T$.

Le signal d'erreur $\Delta C$ délivré par le soustracteur 17 est alors appliqué au moteur M après amplification par un amplificateur de puissance 19.

On obtient ainsi une commande asservie du moteur M à deux boucles d'asservissement successives (position angulaire/couple) qui permet d'utiliser une loi d'effort relativement complexe, par exemple de type élastique ou de type visqueux.

La figure 3 montre, à titre d'exemple, une loi d'effort $C_1$ de type élastique à deux pentes, ainsi que les différents couples pris en compte pour l'élaboration de cette loi d'effort, en particulier, le couple $C_2$ exercé par le ressort principal $T$ et le couple engendré par le ressort d'équilibrage $R_0$. Le couple de consigne $C_0$ est élaboré ici, à partir de l'écart $\Delta\alpha = \alpha_0 - \alpha$ par le circuit de calcul 15, lequel peut être aussi bien analogique que numérique. Tous les paramètres caractéristiques de cette loi peuvent être commandés de l'extérieur.

Dans le cas où la loi d'effort est de type visqueux, la consigne $\alpha_0$ demeure égale à 0. Seule la loi d'élaboration de la consigne de couple est différente. On a en effet :

$$C = C_0 + g_0\,\alpha = Z\dot{\alpha}$$

Z étant l'amortissement désiré. D'où la loi d'élaboration du couple :

$$C_0 = Z\dot{\alpha} - g_0\alpha$$

Bien entendu, la dérivation nécessaire sera imparfaite, et de la forme

$$\frac{\dot{\alpha}}{1 + \tau s}$$

avec $\tau$ voisin de 1 ms.

On en déduit la nouvelle fonction à réaliser :

$$C_0 = -\,g_0\,\frac{1 + (1 - \dfrac{Z}{g_0})\,s}{1 + \tau s}$$

Si la compensation du ressort d'équilibrage est parfaite, le manche reste à l'endroit où on le lâche, pourvu que sa vitesse soit nulle.

Comme précédemment mentionné, dès le départ le système est conçu pour éliminer l'éventualité de pannes catastrophiques. Les principales dispositions permettant d'aboutir à ce résultat sont énnumérées ci-après.

## 1) FONCTIONNEMENT AVEC COUPURE DES EFFORTS

Dans ce cas, l'embrayage n'est pas alimenté et la commande du moteur est inhibée.

Le manche est rappelé au zéro par le ressort d'équilibrage. Il bénéficie de l'amortissement apporté par l'amortisseur à courants de Foucault A, au travers du ressort principal T.

Ce cas correspond, bien entendu, à un mode dégradé de fonctionnement.

## 2) PERTE DE L'INFORMATION DE POSITION

Du point de vue électrique, il est clair que le problème est résolu par l'utilisation de quatre chaînes indépendantes sur chaque axe.

Du point de vue mécanique, on dispose des détecteurs au plus près du manche 1. Les quatre détecteurs d'un axe ne sont pas entraînés par le même organe : on pourra admettre cependant deux détecteurs double entraînés par deux roues différentes.

## 3) BLOCAGE MECANIQUE

C'est la raison profonde de l'utilisation du ressort qui permet de surpasser tout blocage en amont dans la chaîne. De plus, si le blocage a lieu au niveau du moteur, on pourra encore annuler les efforts par un débrayage.

Un blocage dans le ressort principal T lui-même, qui perd ainsi son élasticité, est ressenti immédiatement par le pilote qui est ainsi amené à débrayer le mécanisme.

Le blocage au niveau de l'articulation ou du ressort d'équilibrage est la seule cause catastrophique de blocage. Quelle que soit la solution adoptée, elle ne peut être éliminée. Par conséquent, il est nécessaire que la conception même et, en particulier, la simplicité du dispositif, interdisent pratiquement tout risque de blocage (probabilité de l'ordre de $10^{-8}$ à $10^{-9}$ par heure de vol).

Le ressort d'équilibrage pourrait d'ailleurs être supprimé dans le cas où on n'exigerait pas de mode dégradé en commande intégrale : en effet, cette situation pourrait éventuellement être remplacée par un passage en commande de position.

## 4) RUPTURE DE LA CHAINE

Pourvu que la rupture se produise en amont des détecteurs $\alpha$, il n'en résulte pas de conséquence désastreuse. On se retrouve en situation d'annulation des efforts. Le cas de la rupture au niveau des détecteurs ramène au paragraphe 2).

## 5) PANNES D'ELECTRONIQUE

On se prémunit contre les pannes d'électronique, entre autres celles conduisant à un emballement du moteur, en effectuant des contrôles de cohérence sur certains paramètres internes.

On peut remarquer qu'en fonctionnement normal :

a) le terme d'écart $\Delta C = C_0 - C$ de l'asservissement de couple doit être voisin de zéro ;

b) que le manche soit piloté ou non, le couple appliqué au manche 1 s'annule en même temps que l'écart $\alpha_0 - \alpha$.

Donc, si on désigne par X, Y et Z les fonctions logiques suivantes :

$$X \to |C_0 - C| > E1$$
$$Y \to |C| > E2,$$

ce couple C étant calculé par la formule :

$$C = P_0 \, \text{sign} \, \alpha_0 + g_0\alpha + mg \, (m\alpha - \alpha')$$
$$Z \to |\alpha_0 - \alpha| > E3$$

On pourra utiliser comme signal de défaut la fonction suivante :

$$DEF = X + Y\overline{Z} + Z\overline{Y}$$

Les E, E1 et E2 sont de petites quantités à optimiser.

Dans l'exemple représenté figure 1, le dispositif est en outre complété par un dispositif de surveillance 20 qui surveille en permanence les valeurs du signal d'erreur de position $\Delta\alpha$, du signal d'erreur de couple $\Delta C$ ainsi que les valeurs relatives des angles $\alpha$, $\alpha'$ mesurées par les détecteurs $D_1$, $D_2$ ainsi que la valeur du signal de référence $\alpha_0$. Ce dispositif de surveillance est conçu de manière à émettre, lorsque survient une anomalie dans les paramètres précédemment évoqués, un signal de défaut qui est transmis au calculateur de gestion 12 de l'ensemble du dispositif. A la suite de l'émission de ce signal de défaut, le calculateur 12 commande l'interruption de l'alimentation en courant électrique de l'embrayage E, de manière à provoquer un débrayage. Dans ce cas, le dispositif d'asservissement n'intervient plus et l'amortisseur garantit encore une certaine qualité du pilotage.

## Revendications

1. Dispositif de commande électromécanique utilisable pour le pilotage d'un véhicule, ce dispositif faisant intervenir :
   - un manche de pilotage (1) articulé sur un support au moyen d'un dispositif d'articulation (3) à au moins un degré de liberté et qui présente donc au moins un axe de sortie (4, 5),
   - un ensemble de détection comportant au moins un capteur de position (10, 11) associé audit axe,
   - au moins un électromécanisme (6, 7) agissant sur ledit axe (4, 5) par l'intermédiaire d'un dispositif de transmission, de manière à opposer aux mouvements du manche (1) des efforts résistants conformément à une loi d'effort prédéterminée,

caractérisé en ce que ledit manche de pilotage (1) est articulé sur un support au moyen d'un dispositif d'articulation (3) à deux degrés de liberté et à deux axes de sortie, respectivement associés à deux capteurs de position (10, 11) dudit ensemble de détection, deux électromécanismes (6, 7) agissant respectivement sur lesdits axes (4, 5) par l'intermédiaire de deux dispositifs de transmission respectifs (8, 9), de manière à opposer aux mouvements du manche (1) des efforts résistants conformément à une loi d'effort prédéterminée, et en ce que chacun des dispositifs de transmission (8, 9) comprend une liaison élastique (T) disposée en série, en ce que la commande de chacun des électromécanismes (M) est assurée par un dispositif d'asservissement engendrant un signal de commande représentatif de la différence ($\Delta C$) entre la valeur de l'effort (C) exercé sur le manche (1) par l'électromécanisme (M) et une première valeur de consigne ($C_o$) élaborée par un calculateur (15) selon une loi d'effort, en fonction de la position du manche (1) et en ce que la valeur de l'effort (C) exercé sur le manche (1) par l'électromécanisme (M)) est déterminée en fonction des valeurs mesurées par les détecteurs ($D_1$, $D_2$) qui mesurent les déformations de la liaison élastique (T).

2. Dispositif selon la revendication 1, caractérisé en ce que la susdite première valeur de consigne ($C_o$) est élaborée en fonction de l'écart entre une valeur ($\alpha$) représentative de la position du manche et une valeur de consigne ($\alpha_o$).

3. Dispositif selon l'une des revendications 1 et 2, caractérisé en ce que le susdit électromécanisme comprend un moteur (M) apte à engendrer un couple (C) sur un axe de sortie (4, 5) correspondant de l'articulation (3) du manche (1), et en ce que le susdit dispositif de transmission comprend successivement, à partir du moteur :
   - un embrayage (E) à commande électriaue de type à appel de courant,
   - un amortisseur (A) à courant de Foucault,
   - un premier réducteur ($R_1$),
   - un ressort de torsion constituant la susdite liaison élastique,
- un second réducteur ($R_2$) dont l'arbre de sortie est accouplé à l'axe de sortie (4, 5) de l'articulation (3) du manche (1).

4. Dispositif selon la revendication 3, caractérisé en ce que les deux détecteurs ($D_1$, $D_2$) permettent ce déterminer l'écart angulaire formé entre les deux extrémités du ressort (T), et en ce qu'il comprend des moyens (18) permettant de déterminer, à partir de cet écart angulaire, le couple (C) appliqué au manche (1) par le dispositif de transmission.

5. Dispositif selon l'une des revendications 3 et 4, caractérisé en ce qu'il comprend des moyens (20) de détection de défaut de fonctionnement du dispositif d'asservissement et des moyens (E) permettant de provoquer le débrayage du dispositif de transmission lorsqu'un défaut a été constaté.

6. Dispositif selon l'une des revendications précédentes, caractérisé en ce que le manche (1) est sollicité par un ressort d'équilibrage ($T_0$).

**Patentansprüche**

1. Elektromechanische Steuervorrichtung, anwendbar zur Steuerung eines Fahrzeugs, wobei diese Vorrichtung verwendet :
    - einen Steuerknüppel (1), der auf einem Träger mittels einer Gelenkvorrichtung (3) mit mindestens einem Freiheitsgrad angelenkt ist und die also mindestens eine Ausgangsachse (4, 5) aufweist ;
    - eine Erfassungseinheit, die einen oder mehrere Lagesensoren (10, 11) aufweist, die zu dieser Achse (4, 5) gehören ;
    - mindestens einen Elektromechanismus (6, 7), der auf besagte Achse (4, 5) über eine Übertragungsvorrichtung einwirkt, sodass sie den Bewegungen des Steuerknüppels (1) Widerstandskräfte entsprechend einem vorbestimmten Kräftegesetz entgegensetzt, dadurch gekennzeichnet, dass besagter Steuerknüppel (1) auf einem Träger mitels einer Gelenkvorrichtung (3) mit zwei Freiheitsgraden angelenkt ist, und mit zwei Ausgangsachsen, die jeweils zwei Lagesensoren (10, 11) der besagten Detektoreinheit zugeordnet sind und zwei Elektromechanismen (6, 7) jeweils auf besagte Achsen (4, 5) durch zwei jeweilige Übertragungsvorrichtungen (8, 9) einwirken, um den Bewegungen des Steuerknüppels (1) Widerstandskräfte entsprechend einem vorbestimmten Kräftegesetz entgegenzusetzen, und dass jede dieser Übertragungsvorrichtungen eine in Reihe angeordnete biegsame Verbindung (T) aufweist, dass die Steuerung jedes der Elektromechanismen (M) durch eine Regelungsvorrichtung bewirkt wird, die ein Steuersignal erzeugt, das für den Unterschied ($\Delta C$) zwischen dem Wert, der auf den Steuerknüppel (1) durch den Elektromechanismus (M) ausgeübten Kraft (C) und einem ersten Bezugswert ($C_o$) repräsentativ ist, der von einem Rechner (15) gemäss einem Kräftegesetz in Abhängigkeit von der Stellung des Steuerknüppels (1) ausgearbeitet wird, und dass der Wert der durch den Elektromechanismus (M) auf den Steuerknüppel (1) ausgeübten Kraft (C) in Abhängigkeit von den Werten bestimmt wird, die von den Detektoren ($D_1$, $D_2$) gemessen werden, welche die Verformungen der biegsamen Verbindung (T) messen.

2. Vorrichtung nach Anspruch 1, dadurch gekennzeichnet, dass der genannte erste Bezugswert ($C_o$) in Abhängigkeit von dem Abstand zwischen einem für die Stellung des Steuerknüppels repräsentativen Wert ($\alpha$) und einem Bezugswert ($\alpha_o$) erarbeitet wird.

3. Vorrichtung nach einem der Ansprüche 1 und 2, dadurch gekennzeichnet, dass der genannte Elektromechanismus einen Motor (M) aufweist, der auf einer entsprechenden Ausgangsachse (4, 5) des Gelenks (3) des Steuerknüppels (1) ein Drehmoment (C) erzeugen kann, und dass die genannte Übertragungsvorrichtung ausgehend vom Motor nacheinander aufweist :
    - eine Schaltung (E) mit elektrischer Steuerung von der Art mit Stromstoss,
    - einen Stossdämpfer (A) mit Foucaultschem Strom,
    - ein erstes Untersetzungsgetriebe ($R_1$),
    - eine Verdrehungsfeder, die die biegsame Verbindung darstellt,
    - ein zweites Untersetzungsgetriebe ($R_2$), dessen Ausgangswelle an die Ausgangsachse (4, 5) des Gelenks (3) des Steuerknüppels (1) angekoppelt ist.

4. Vorrichtung nach Anspruch 3, dadurch gekennzeichnet, dass die beiden Detektoren ($D_1$, $D_2$) es ermöglichen, den zwischen den beiden Enden der Feder (T) gebildeten Drehwinkel zu bestimmen, und dass sie Mittel (18) aufweist, die es ermöglichen, ausgehend von diesem Drehwinkel das Drehmoment (C) zu bestimmen, das durch die Übertragungsvorrichtung auf den Steuerknüppel (1) ausgeübt wird.

5. Vorrichtung nach einem der Ansprüche 3 und 4, dadurch gekennzeichnet, dass sie Mittel (20) zur Feststellung von Funktionsstörungen der Regelungsvorrichtung und Mittel (E) aufweist, die das Auskuppeln der Übertragungsvorrichtung auslösen können, wenn ein Fehler festgestellt wurde.

6. Vorrichtung nach einem der vorhergehenden Ansprüche, dadurch gekennzeichnet, dass der Steuerknüppel (1) durch eine Entlastungsfeder ($T_o$) beansprucht wird.

**Claims**

1. An electromechanical control device usable for piloting a vehicle, this device comprising :
   - a piloting control stick (1) articulated to a support by means of an articulation device (3) with at least one degree of freedom which therefore has at least one output axis (4, 5),
   - a detection assembly comprising at least one sensor (10, 11) associiated with said axis,
   - at least one electromechanism (6, 7) acting on said axis (4, 5) via a transmission device, so as to oppose to the movements of the control stick (1) resistant forces in accordance with a predetermined force law, characterized in that said piloting control stick (1) is articulated to a support by means of an articulation device (3) with two degrees of freedom and two output axes respectively associated with two position sensors (10, 11) of said detection assembly, two electromechanisms (6, 7) acting respectively on said axes (4, 5) by means of two respective transmission devices (8, 9), so as to oppose to the movements of the control stick (1) resistant forces conforming to a predetermined force law, in that each of the transmission devices (8, 9) comprises a resilient connection (T) disposed in series, in that the control of each of the electromechanisms (M) is effected by a servo-control device generating a control signal representative of the difference ($\Delta C$) between the value of the force (C) exerted on the control stick (1) by the electromechanism (M) and a first reference value ($C_o$) elaborated by a computer (15) according to a force law, as a function of the position of the control stick (1), and in that the value of the force (C) exerted on the control stick (1) by the electromechanism (M) is determined as a function of the values measured by the detectors ($D_1$, $D_2$) which measure the deformation of the resilient connection (T).

2. The device as claimed in claim 1, characterized in that said first reference value ($C_o$) is formed as a function of the difference between a value ($\alpha$) representative of the position of the control stick and a reference value ($\alpha_o$).

3. The device as claimed in one of claims 1 and 2, characterized in that said electromechanism comprises a motor (M) adapted to generate a torque (C) on a corresponding output axis (4, 5) of the articulation (3) of the control stick (1), in that said transmission device comprises successively, from the motor :
   - a control clutch (E) with electric control of current demand type,
   - an eddy current damper (A),
   - a first reducer ($R_1$),
   - a torsion spring forming said resilient connection,
   - a second reducer ($R_2$) whose output shaft is coupled to the output axis (4, 5) of the articulation (3) of the control stick (1).

4. The device as claimed in claim 3, characterized in that said two detectors ($D_1$, $D_2$) determine the angular difference between the two ends of the spring (T), and in that it comprises means (18) for determining, from this angular difference, the torque (C) applied to the control stick (1) by the transmission device.

5. The device as claimed in one of claims 3 and 4, characterized in that it comprises means (20) for detecting an operating defect of the servo-control device and means (E) for causing declutching of the transmission device when a defect has been detected.

6. The device as claimed in one of the preceding claims, characterized in that the control stick (1) is urged by a balancing spring ($T_o$).

# FIG.1

# FIG.3

# FIG. 2